# EUROPEAN PATENT SPECIFICATION

(11) **EP 0 586 502 B1**
(45) Date of publication and mention of the grant of the patent: **23.04.1997**
(21) Application number: 92911772.9
(22) Date of filing: 12.05.1992
(51) Int. Cl.: F16C 33/62

(54) **CORROSION-RESISTANT ZINC-ALLOY PLATED ROLLING ELEMENT BEARING**
WÄLZLAGER MIT BELAG AUS EINER KORROSIONSBESTÄNDIGEN ZINK-LEGIERUNG
PALIER DE ROULEMENT RECOUVERTES D'ALLIAGE ZINC ET RESISTANT A LA CORROSION

(30) Priority: 05.06.1991 US 710656
(43) Date of publication of application: 16.03.1994
(73) Proprietor: MPB CORPORATION, Keene, NH 03431-0547 (US)
(72) Inventor: WARD, Peter, Peterborough, NH 03458 (US)
(74) Representative: Deans, Michael John Percy
(86) International application number: PCT/US92/03947
(87) International publication number: WO 92/21890

(56) References cited:
- DD-A- 247 049
- DE-A- 1 907 897
- GB-A- 732 268
- GB-A- 2 121 120
- JP-A-58 137 621
- JP-A-60 241 516
- US-A- 2 755 686
- US-A- 3 212 834
- US-A- 3 641 990
- US-A- 3 657 780
- US-A- 4 293 171
- US-A- 4 309 064
- US-A- 4 474 861
- US-A- 4 641 976
- US-A- 4 765 871
- US-A- 4 972 764

## Description

The invention relates to corrosion resistant rolling element bearings.

Some bearing applications require bearings which are capable of both enduring extremely high loads and surviving in very corrosive environments. For example, the bearings in aircraft landing gear of naval airplanes must survive the pounding of repeated landings and the constant exposure to salt spray. The high strength material from which high load bearings are typically made (e.g. 52100 bearing steel) does not provide the required level of corrosion resistance for such environments.

In an effort to improve the corrosion resistance of such bearings, other base materials, such as 316 steel, have been utilized. A problem with many such alternative base materials, however, is that they are not hardenable and thus are not capable of providing the required load handling capabilities of the high strength steels. Another approach has been to deposit Thin Dense Chrome (TDC) (i.e., a very hard plating) onto the exposed areas including the functional surfaces. With TDC, however, it is very difficult to obtain sufficiently thick layers while still achieving the required level of consistency (i.e., an absence of holes and surfaces flaws which provide focal points at which corrosive activity tends to occur). Yet another approach has been to deposit cadmium protective layers, which are soft in comparison to the hardened, high strength steel from which the bearing is constructed. Due to its softness, however, cadmium is not appropriate for use on the functional surfaces. Under load conditions, the cadmium exhibits a "gummy" consistency which either interferes with the operation of the bearing or which results in its being quickly worn off thereby eliminating the protection which it originally provided.

Further it is known from US-A- 3 212 834 to provide the races of the inner and outer ring of a grooved ball bearing with a corrosion resistant layer of zirconium diboride.

In accordance with the present invention, there is provided a rolling element bearing comprising a first element having a first race; a second element having a second race, said first and second elements being positioned so that said first and second races form a channel; a first corrosion resistant layer on said first race; a second corrosion resistant layer on said second race; and a plurality of rolling elements disposed within said channel formed by said first and second races; characterised in that said first corrosion resistant layer is formed by a first zinc alloy plated layer, and in that said second corrosion resistant layer is formed by a second zinc alloy plated layer.

Preferred embodiments include the following features. The rolling element bearing also includes a liquid lubricant (e.g. a grease) within the channel. The first and second zinc alloys exhibit a columnar structure. The first and second zinc alloys are zinc-nickel alloys. The first element is an inner bearing ring and the second element is an outer bearing ring. Each of the rolling elements is a spherical bearing ball. The thickness of each of the first and second zinc alloy layers is less than about 0.0010 inch (25.4 µm), and more specifically less than about 0.0003 inch (7.62 µm). Each of the rolling elements includes a zinc alloy plated layer on its surface, where the thickness of the zinc alloy layer is less than about 0.0001 inch (2.54 µm).

One advantage of our practical embodiments of roller element bearing is that they exhibit excellent corrosion protection on the high load, plated functional surfaces (e.g. the races) of the rolling element bearings. Experiments have shown that even after 100 hours of exposure to salt spray in accordance with ASTM B117, the functional surfaces of the bearing rings which have been plated with zinc-nickel showed an absence of corrosion.

In addition, the zinc-nickel plating does not interfere with or degrade the lubrication properties of the lubricants (e.g. greases) which are typically necessary in such bearings.

Moreover, though the zinc-nickel plating is softer than the underlying high strength steel from which the bearing is made, it withstands the rolling contact under high load conditions (e.g. in excess of 150,000 p.s.i./ 1.03x10⁹N/m²). In addition, it does not degrade the underlying base material and thereby limit the load carrying capabilities of the bearing.

Other advantages and features will become apparent from the following description of the preferred embodiment.

In the drawings:
Fig. 1 is a cross-sectional view of a portion of a bearing assembly;
Fig. 2 is a cross-sectional view and Fig. 2a is an enlargement of a portion of the outer ring with an expanded view of the zinc-nickel plates layer on the inner race; and
Fig. 3 is a cross-sectional view and Fig. 3a is an enlargement of a portion of the inner ring with an expanded view of the zinc-nickel plated layer on the outer race.

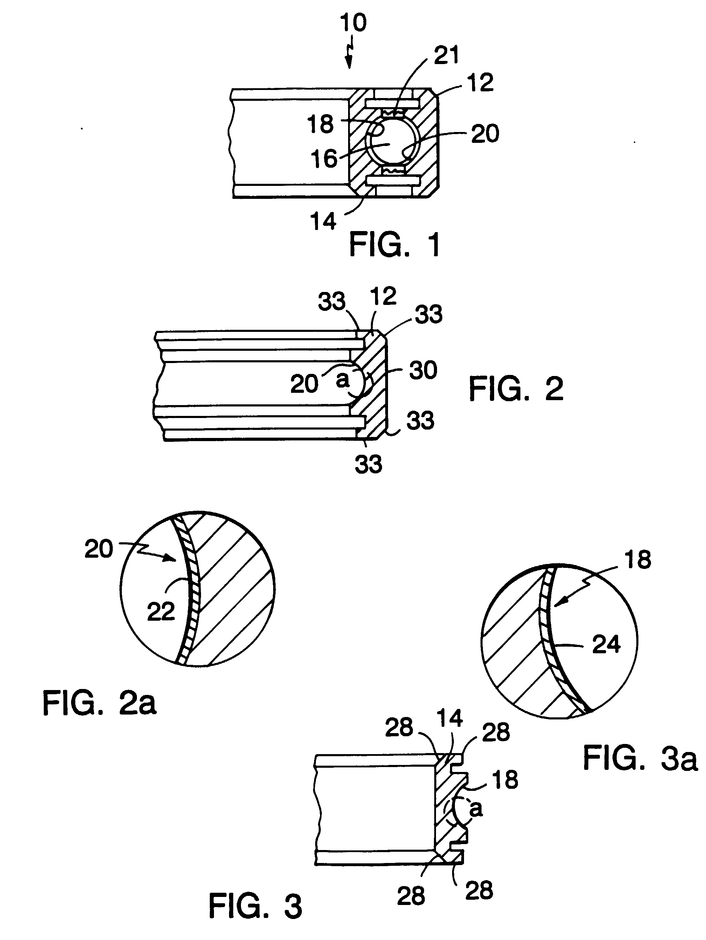

Fig. 1 shows a bearing assembly 10 which will be used to illustrate the invention. Bearing assembly 10 includes an outer ring 12, an inner ring 14 and a set of bearing balls 16 (only one of which is shown). An outer race 20 is formed around the inside circumference of outer ring 12 and an inner race 18 is formed around the outside circumference of inner ring 14. When inner ring 14 is assembled into outer ring 12, outer and inner races 20 and 18 are aligned with respect to each other so as to form a channel which holds the set of bearing balls 16. Thus, inner ring 14 is free to rotate within outer ring 12 about a common axis which is perpendicular to the plane of both rings. The channel also contains a conventional lubricant 21, e.g. Mobil 28 grease sold by Mobil Oil Corporation.

As shown in greater detail in the exploded views in Figs. 2 and 3, a zinc-nickel plated layer 22 covers outer race 20 and a zinc-nickel plated layer 24 covers inner race 18. In the described embodiment, the thickness of the plated layers 22 and 24 within the races is approximately 0.0003 inch (7.62 µm). Zinc-nickel plated layers 22 and 24 provide protection against corrosion which might tend to be caused by environmental conditions, e.g. the presence of salt water.

Zinc-nickel layers 22 and 24 are applied by an electrical plating process as described in US Patent 4,765,871 issued to Hsu et al on August 23, 1988. This process produces an alloy plated layer with a columnar structure. In the described embodiment, inner ring 14 and outer ring 12 zinc-nickel is electroplated onto the entire ring including the races. During the plating process, however, inner ring 14 is oriented within the electroplating bath relative to the zinc and nickel anodes so as to control the thickness of the plating which is formed on the outboard faces 28 of inner ring 14 to be within the range of 0.0002 to 0.0005 inch (5.08 to 12.7 µm). The thickness of the plating elsewhere on inner ring 14 is typically less than the controlled thickness. Similarly with outer ring 12, during the plating process, it is oriented within the electroplating bath relative to the zinc and nickel anodes so as to control, the thickness of the plating which is formed on the outside surface 30 and outboard faces 33 of outer ring 12 to also be within the range of 0.0002 to 0.0005 inch (5.08 to 12.7 µm). Thus, as with inner ring 14 the thickness of the plating elsewhere on outer ring 12 is also typically less than this controlled thickness.

The zinc-nickel plated layers appear to exhibit a hardness that is in the range of about Rockwell c 30 to 45, significantly softer than the underlying hardened, high strength steel and significantly softer than the thin dense chrome layers which have been traditionally used to achieve corrosion resistance on the functional surfaces of high load bearings.

The zinc-nickel plated layers exhibit a columnar structure and it is believed that it is this which makes them more resistant (as compared to a laminar structure, for example) to detaching from the race under heavy load conditions. Experiments have indicated that the zinc-nickel plating on the races survives 150,000 cycles under 20% of the maximum rated load. This is about 2.5 times the normal design life.

Both outer ring 12 and inner ring 14 may be made of metal capable of withstanding stress levels of greater than 150,000 p.s.i. (1.03x10⁹N/m²), including for example, thru-hardened, high strength steel (e.g. 52100 bearing steel heat treated to Rockwell c 60 or higher) or case-hardened steel with a 0.0005-0.0010 inch (12.7 to 25.4 µm) thick case-hardened layer. In the described embodiment, rings 12 and 14 are fabricated from annealed steel in a conventional manner. The rough stock is heat treated at 1800-2000°F (982 to 1093°C) tempered one or more times at 300-400°F (149 to 204°C) to improve the toughness of the steel (e.g. Rockwell c 58-62) and then precision ground on all surfaces except the inner bore of inner ring 14. As an optional step, the precision ground rings may be baked for 3.5 hours at a temperature of 350°F (177°C) prior to the plating process. After the optional pre-plating bake, a zinc-nickel layer is electroplated onto rings 12 and 14, including the functional surfaces. To perform the plating, rings 12 and 14 are rack mounted in the plating bath. They are suspended on the racks in such a way as to not obstruct plating onto the functional surfaces.

After the plating process is complete, the rings are again baked for 3.5 hours at 350°F (177°C) to avoid hydrogen embrittlement of the base metal. This post-plating bake is done within four hours of when the plating process was completed.

To extend the life of the bearings, it may also be desirable to administer a chromate treatment to the surface of the zinc-nickel layers followed by another bake out. The chromate treatment prevents "white rust" from forming on the zinc-nickel surface and postpones degradation of the zinc-nickel layers.

Other embodiments are feasible. For example, the invention has applicability to the general category of rolling element bearings, which includes among others, bearings which use tapered rolling bearings and those which use cylindrical rollers. In addition, any one of a broad range of zinc alloy plated deposits may be used to provide similar corrosion resistance on the functional surfaces. Other appropriate zinc alloys include zinc-tin, zinc-cobalt and zinc-iron, to name a few.

Also, it may be desirable to plate the rolling elements as well as the races. The plating process is as described in the above-mentioned US Patent 4,765,871. The bath might be, for example, a conventional barrel plating arrangement rather than the rack mount arrangement used for plating the rings. Due to the micro sliding which the balls experience, it may be desirable to keep the thickness of the plated layer to less than 0.0001 inch (2.54 µm).

## Claims

1. A rolling element bearing (10) comprising a first element (14) having a first race (18); a second element (12) having a second race (20), said first and second elements (14,12) being positioned so that said first and second races (18,20) form a channel; a first corrosion resistant layer (24) on said first race (18); a second corrosion resistant layer (22) on said second race (20); and a plurality of rolling elements (16) disposed within said channel formed by said first and second races (18,20); characterised in that said first corrosion resistant layer is formed by a first zinc alloy plated layer (24), and in that said second corrosion resistant layer is formed by a second zinc alloy plated layer (22).

2. A rolling element bearing according to Claim 1, further characterised in that said first and second zinc alloys exhibit a columnar structure.

3. A rolling element bearing according to Claim 1, further characterised in that said first and second zinc alloys are zinc-nickel alloys.

4. A rolling element bearing according to Claim 1, further characterised in that said first element is an inner bearing ring (14) and said second element is an outer bearing ring (12).

5. A rolling element bearing according to Claim 4, further characterised in that each of said rolling elements of said plurality of rolling elements is a spherical bearing ball (16).

6. A rolling element bearing according to Claim 1, further characterised in that the thickness of each of the first and second zinc alloy layers is less than about 0.0010 inch (25.4 µm), and preferably less than about 0.0003 inch (7.6 µm).

7. A rolling element bearing according to Claim 1, further characterised in that each of said plurality of rolling elements includes a zinc alloy plated layer on its surface, preferably having a thickness of less than about 0.0001 inch (2.54 µm).

8. A rolling element bearing according to Claim 3, further characterised in that the first and second elements are made of steel.

9. A rolling element bearing according to Claim 8, further characterised in that said steel is case-hardened steel or thru-hardened high-strength steel.

10. A rolling element bearing according to Claims 1 or 8 further characterised in having a liquid lubricant, preferably a grease, within said channel.

## Patentansprüche

1. Rollkörperlager (10), umfassend ein erstes Element (14) mit einem ersten Laufring (18), ein zweites Element (12) mit einem zweiten Laufring (20), wobei das erste und das zweite Element (14, 12) so angeordnet sind, daß der erste und zweite Laufring (18, 20) einen Kanal formen, sowie eine erste korrosionsbeständige Schicht (24) auf dem ersten Laufring (18), eine zweite korrosionsbeständige Schicht (22) auf dem zweiten Laufring (20) und eine Vielzahl von Rollkörpem (16), angeordnet innerhalb dieses Kanals, der durch den ersten und zweiten Laufring (18, 20) gebildet wird,
dadurch gekennzeichnet,
daß die erste korrosionsbeständige Schicht durch eine erste Zink-Legierung-Plattierungsschicht (24) und die zweite korrosionsbeständige Schicht durch eine zweite Zink-Legierung-Plattierungsschicht (22) gebildet ist.

2. Rollkörperlager nach Anspruch 1,
dadurch gekennzeichnet,
daß die erste und zweite Zink-Legierung eine säulenartige Struktur aufweisen.

3. Rollkörpeflager nach Anspruch 1,
dadurch gekennzeichnet,
daß die erste und zweite Zink-Legierung Zink-Nickel-Legierungen sind.

4. Rollkörperlager nach Anspruch 1,
dadurch gekennzeichnet,
daß das erste Element ein innerer Lagerring (14) und das zweite Element ein äußerer Lagerring (12) ist

5. Rollkörperlager nach Anspruch 4,
dadurch gekennzeichnet,
daß jeder der Rollkörper dieser Vielzahl von Rollkörpern eine kugelförmiger Lagerkugel (16) ist.

6. Rollkörperlager nach Anspruch 1,
dadurch gekennzeichnet,
daß die Dicke sowohl der ersten als auch der zweiten Zink-Legierung-Schichten weniger als etwa 0,0010 inch (25,4µm) beträgt und insbesondere weniger als etwa 0,0003 inch (7,6 µm) beträgt.

7. Rollkörperlager nach Anspruch 1,
dadurch gekennzeichnet,
daß jeder der Vielzahl der Rollkörper eine Zink-Legierung-Plattierungsschicht auf seiner Oberfläche aufweist, die vorzugsweise eine Dicke von weniger als etwa 0,0001 inch (2,54µm) beträgt.

8. Rollkörperlager nach Anspruch 3,
dadurch gekennzeichnet,
daß die ersten und die zweiten Elemente aus Stahl gefertigt sind.

9. Rollkörperlager nach Anspruch 8,
dadurch gekennzeichnet,
daß dieser Stahl teilweise-gehärteter Stahl oder durchgehärteter hochfester Stahl ist.

10. Rollkörperlager nach den Ansprüchen 1 oder 8,
dadurch gekennzeichnet,
daß es ein flüssiges Schmiermittel, vorzugsweise ein Fett, innerhalb des Kanals aufweist.

## Revendications

1. Palier (10) à éléments roulants, comprenant un premier élément (14) ayant un premier chemin de roulement (18), un second élément (12) ayant un second chemin de roulement (20), le premier et le second élément (14, 12) étant disposés afin que le premier et le second chemin de roulement (18, 20) forment un canal, une première couche (24) résistant à la corrosion sur le premier chemin de roulement (18), une seconde couche (22) résistant à la corrosion sur le second chemin de roulement (20), et plusieurs éléments roulants (16) placés dans le canal formé par le premier et le second chemin de roulement (18, 20), caractérisé en ce que la première couche résistant à la corrosion est formée par une première couche (24) d'alliage de zinc déposée et en ce que la seconde couche résistant à la corrosion est formée par une seconde couche (22) d'alliage de zinc déposée.

2. Palier à éléments roulants selon la revendication 1, caractérisé en ce que le premier et le second alliage de zinc ont une structure colonnaire.

3. Palier à éléments roulants selon la revendication 1, caractérisé en ce que le premier et le second alliage de zinc sont des alliages de zinc-nickel.

4. Palier à éléments roulants selon la revendication 1, caractérisé en ce que le premier élément est une bague interne (14) et le second élément une bague externe (12) de palier.

5. Palier à éléments roulants selon la revendication 4, caractérisé en ce que chacun des éléments roulants est une bille sphérique (16).

6. Palier à éléments roulants selon la revendication 1, caractérisé en ce que l'épaisseur de chacune des première et seconde couches d'alliage de zinc est inférieure à 25,4 µm (0,0010 pouce) et de préférence inférieure à 7,6 µm (0,0003 pouce).

7. Palier à éléments roulants selon la revendication 1, caractérisé en outre en ce que chacun des éléments roulants a une couche formée par dépôt d'alliage de zinc à sa surface, avec une épaisseur qui est de préférence inférieure à 2,54 µm environ (0,0001 pouce).

8. Palier à éléments roulants selon la revendication 3, caractérisé en ce que le premier et le second élément sont formés d'acier.

9. Palier à éléments roulants selon la revendication 8, caractérisé en ce que l'acier est de l'acier cémenté ou de l'acier de résistance mécanique élevée durci dans la masse.

10. Palier à éléments roulants selon la revendication 1 ou 8, caractérisé en ce qu'il contient un lubrifiant, de préférence une graisse, dans ledit canal.
